# EUROPÄISCHE PATENTSCHRIFT

(11) **EP 2 769 788 B1**
(45) Veröffentlichungstag und Bekanntmachung des Hinweises auf die Patenterteilung: **27.09.2017**
(21) Anmeldenummer: 13156294.4
(22) Anmeldetag: 22.02.2013
(51) Int. Cl.: B23B 31/175, B23B 31/28

(54) **Spanneinrichtung für Werkzeugmaschinen**
Clamping device for machine tools
Dispositif de tension pour machines-outils

(43) Veröffentlichungstag der Anmeldung: 27.08.2014
(73) Patentinhaber: Hiestand, Karl, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 218 531
- EP-A1- 2 283 955
- EP-A1- 2 295 176
- EP-A2- 0 314 945
- EP-A2- 2 363 224

## Beschreibung

Die Erfindung bezieht sich auf eine Spanneinrichtung für Werkzeugmaschinen, die mit einem Kraftspannfutter versehen ist und dessen Spannbacken über eine axial verschiebbare Zugstange betätigbar sind, wobei die Spanneinrichtung einen umschaltbaren elektrischen Antriebsmotor sowie einen Bewegungswandler zur Umwandlung der Verstellbewegungen der Rotorwelle des Antriebsmotors in axiale Verstellbewegungen der Zugstange aufweist und wobei zwischen dem Antriebsmotor und den Bewegungswandler ein zweistufiges Planetenradgetriebe vorgesehen ist, dessen als Hohlrad ausgebildetes Eingangsglied mit dem Antriebsmotor und dessen als Sonnenrad gestaltetes Ausgangsglied mit dem Bewegungswandler trieblich verbindbar sind

Durch die EP 2363224 A2 ist ein Spannaggregat dieser Art bekannt. Der Bewegungswandler und die diesem zugeordneten Bauteile sind bei dieser Ausgestaltung in einem geschlossenen Gehäuse eingebaut, das mit der Maschinenspindel verbunden ist. Außerdem ist das Gehäuse von einer am Spindelstock angebrachten und somit ebenfalls ortsfest gehaltenen Glocke umgeben, in der auch das Planetenradgetriebe angeordnet ist. Das Hohlrad des zweistufigen Planetenradgetriebes ist hierbei unmittelbar in die Innenmantelfläche der Glocke eingearbeitet, die durch einen abnehmbaren Deckel, in dem das Eingangsglied des Planetenradgetriebes drehbar gelagert ist, verschlossen ist.

Abgesehen davon, dass die Einarbeitung der Verzahnung des Hohlrades der zweiten Stufe des Planetenradgetriebes in die Innenmantelfläche der Glocke sehr kostenintensiv ist, da dieser eine entsprechende Größe ausweisen muss und nicht einfach zu handhaben ist, ist der Bereich, in dem sich das Planetenradgetriebe in der Glocke befindet, nicht flüssigkeitsdicht gestaltet. Über das Wälzlager, mit dem das Eingangsglied in dem Abschlussdeckel der Glocke abgestützt ist, kann nämlich Feuchtigkeit und Schmutz, da eine Befüllung dieses Bereichs der Glocke mit Schmier und/ oder Kühlmittel aus dem gleichen Grunde nicht möglich ist, von außen zu den Bauteilen des Planetenradgetriebes gelangen. Eine längere Standzeit ist demnach nicht gegeben, vielmehr sind dadurch bedingte Betriebsstörungen oftmals in Kauf zu nehmen. Auch sind der Bauaufwand sowie der Aufwand zur Montage des den Be wegungswandler aufnehmenden Gehäuses und der Glocke erheblich. Die bekannte Spanneinrichtung ist demnach oftmals nicht wirtschaftlich einsetzbar.

Das gleiche Problem tritt bei der EP 2 295 176 A1 auf, jedoch wird anstatt eines Planetengetriebes ein mehrstufiges Zahnradgetriebe offenbart, dessen Eingangsglied mit dem Antriebsmotor und dessen Ausgangsglied mit dem Bewegungswandler trieblich verbindbar ist.

Aufgabe der Erfindung ist es daher, die Spanneinrichtung für Werkzeugmaschinen der vorgenannten Gattung in der Weise zu verbessern, in dem nicht nur die Vorteile der bekannten Ausgestaltung nutzbar sind, sondern dass auch Betriebsstörungen durch äußere Einflüsse weitgehend vermieden werden. Das Planetenradgetriebe soll nämlich ebenfalls vor Schmutz und Feuchtigkeit geschützt sein und stets gut geschmiert werden können, außerdem sollen der Anbau der Spanneinrichtung an eine Werkzeugmaschine wie auch ein eventueller Austausch des Planetenradgetriebes ohne Schwierigkeiten in kurzer Zeit zu bewerkstelligen sein, so dass ein vielseitiger und kostengünstiger Einsatz der vorschlagsgemäß ausgebildeten Spanneinrichtung ermöglicht wird.

Gemäß der Erfindung wird dies bei einer Spanneinrichtung für Werkzeugmaschinen der eingangs genannten Art dadurch erreicht, dass das Planetenradgetriebe an den Bewegungswandler unmittelbar oder über Zwischenglieder ankoppelbar ist, und dass der Bewegungswandler und die diesem zugeordneten Bauteile sowie das Planetenradgetriebe jeweils in voneinander getrennten Gehäusen eingebaut sind, von denen das den Bewegungswandler aufnehmende Gehäuse drehtest mit einer Maschinenspindel verbunden und das das Planetenradgetriebe aufnehmende Gehäuse ortsfest an einem Spindelstock abgestützt sind.

Sehr zweckmäßig ist es hierbei, die Radsätze der beiden Stufen des Planetenradgetriebes gleich groß zu dimensionieren. Außerdem sollte das Sonnenrad der ersten

Stufe des Planetenradgetriebes mit dem den Bewegungswandler aufnehmenden Gehäuse und das Sonnenrad der zweiten Stufe mit einem dem Bewegungswandler zugeordneten Antriebsglied koppelbar sein.

Vorteilhaft ist es hierbei auch, das das Planetenradgetriebe aufnehmende Gehäuse zweiteilig und flüssigkeitsdicht auszubilden und aus einem ortsfest abgestützten Gehäusemantel und einem auf diesen aufsetzbaren Gehäusedeckel zusammenzusetzen.

Der Antriebsmotor kann sowohl an dem Gehäusedeckel lösbar befestigt sein und dessen Abtriebswelle kann über ein Zwischenglied mit dem Hohlrad der ersten Stufe des Planetenradgetriebes trieblich verbunden werden als auch über einen Riementrieb mit einem Zwischenglied, das unmittelbar an dem Hohlrad der ersten Stufe des Planetenradgetriebes befestigt ist.

Angebracht ist es ferner, das Sonnenrad der ersten Stufe des Planetenradgetriebes drehtest auf einer das Planetenradgetriebe durchgreifenden Welle anzuordnen und die Welle über eine Zahn- oder Stiftkupplung formschlüssig mit dem den Bewegungswandler aufnehmenden Gehäuse zu verbinden.

Desweiteren sollte die Verzahnung des Hohlrades der zweiten Stufe des Planetenradgetriebes unmittelbar in die Innenmantelfläche des Gehäusemantels des das Planetenradgetriebe aufnehmenden Gehäuses eingearbeitet und das Sonnenrad der zweiten Stufe des Planetenradgetriebes sollte formschlüssig, z.B. mittels einer an einem Zwischenstück vorgesehenen Stirnverzahnung, mit dem den Bewegungswandler zugeordneten Antriebsglied trieblich verbunden sein.

Wird eine Spanneinrichtung gemäß der Erfindung ausgebildet, so sind mittels dieser nicht nur die Vorteile des bekannten vergleichbaren Spannaggregates, nämlich kompakte Bauweise und geringer Energiebedarf im Betrieb, geben, sondern es ist auch gewährleistet, dass das Planetenradgetriebe vor äußeren Einflüssen wie Schmutz und Feuchtigkeit geschützt ist und dass dieses als selbstständige Einheit in einem mit Schmiermittel versehenen ortsfest anzuordnenden gesonderten Gehäuse mit hohen Drehzahlen umlaufen kann. Außerdem ist gegebenenfalls ein Austausch des Planetenradgetriebes ohne großen zeitlichen Aufwand möglich. Eine lange, störungsfreie und wirtschaftliche Betriebsweise ist demnach gewährleistet. Außerdem ist die vorschlagsgemäß gestaltete Spanneinrichtung vielseitig und wirtschaftlich einsetzbar.

In der Zeichnung ist ein Ausführungsbeispiel der gemäß der Erfindung gestalteten Spanneinrichtung dargestellt, das nachfolgend im Einzelnen erläutert ist. Hierbei zeigt, jeweils in einem Axialschnitt:
- Figur 1: die Spanneinrichtung, angebaut an eine Werkzeugmaschine, und
- Figur 2: eine Ausführungsvariante der Spanneinrichtung nach Figur 1, in vergrößerter Teilansicht.

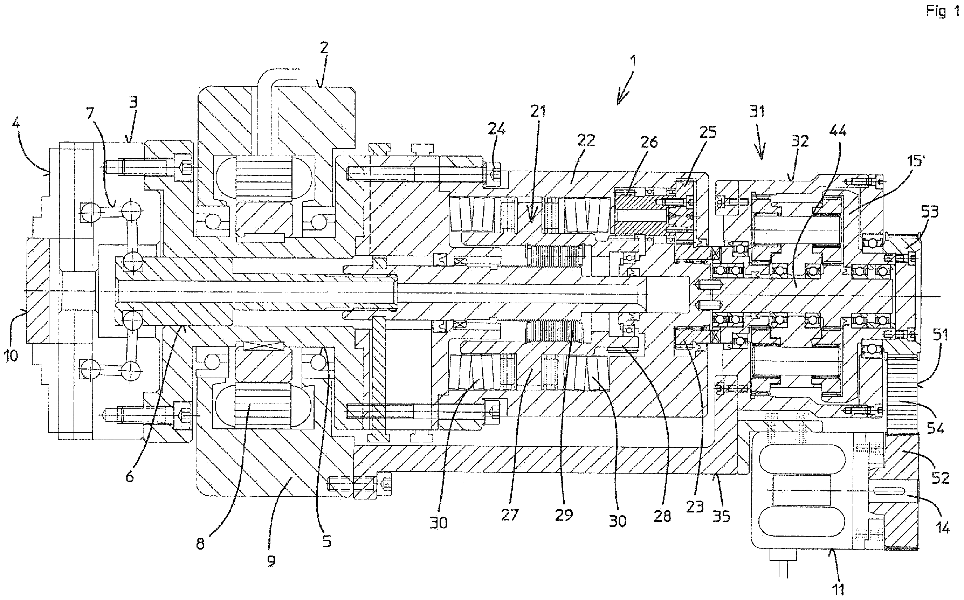

Die in Figur 1 dargestellt und mit 1 bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 einspannbar ist. Die Spannbacken 4 des Kraftspannfutters 3 sind hierbei über Umlenkhebel 7 durch eine axial verstellbare Zugstange 6 betätigbar, die eine Maschinenspindel 5 durchgreift und mit einem umschaltbaren elektrischen Antriebsmotor 11 über einen Bewegungswandler 21 in Triebverbindung steht. Mittels des Bewegungswandlers 21 werden rotorische Verstellbewegungen des Antriebsmotors 11 in axiale Verstellbewegungen der Zugstange 6 umgewandelt.

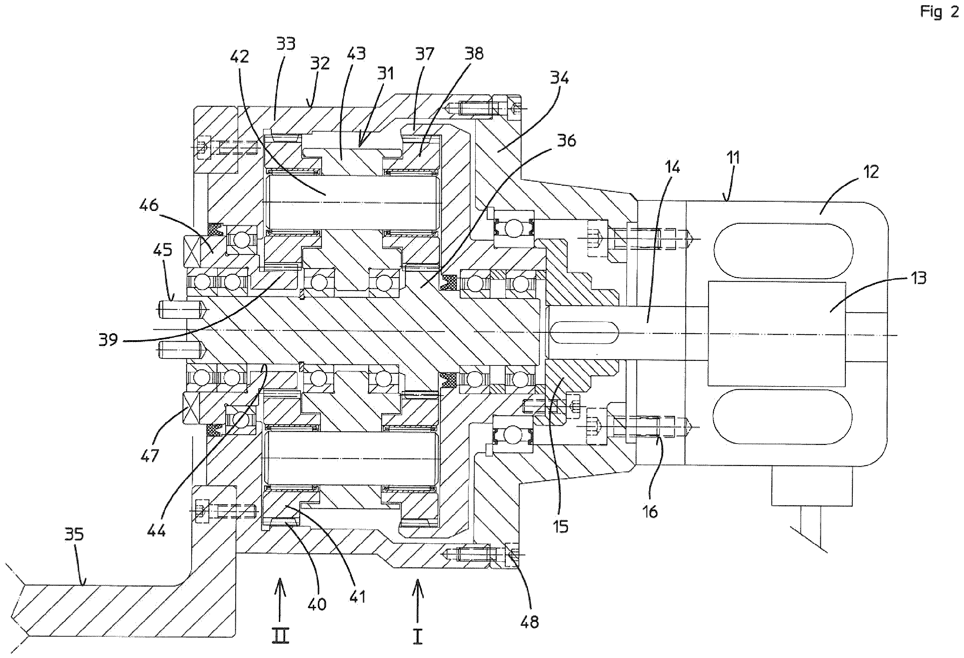

Der Antriebsmotor 11 besteht, wie dies der Figur 2 zu entnehmen ist, aus einer Stator 12 und einem Rotor 13, dessen Rotorwelle 14 bei der Ausführungsvariante nach Figur 2 über ein Zwischenglied 15 mit einem zweistufigen Planetenradgetriebe 31 trieblich verbunden ist. Das Planetenradgetriebe 31 ist in einem ortsfest angeordneten Gehäuse 32 eingebaut, das mittels eines Trägers 35 an einem Spindelstock 9, in dem auch ein Antriebsmotor 8 der Werkzeugmaschine 2 eingesetzt ist, abgestützt ist.

Der Bewegungswandler 21 ist ebenfalls zusammen mit dem diesen zugeordneten Bauteilen, nämlich einer Verstellmutter 27, auf diese einwirkenden Federn 30 sowie mehreren Kugel- oder Planetenrollspindeln 29 in einem Gehäuse 22 eingesetzt, das mittels Schrauben 24 fest an der Maschinenspindel 5 angebracht ist. Über ein Antriebsglied 23 und mit diesem zusammenwirkenden Zahnräder 25, 26, wobei das Zahnrad 26 in eine an der Verstellmutter 27 angebrachte Verzahnung 28 eingreift, wird die Antriebsenergie dem Bewegungswandler 21 zugeführt.

Das das Planetenradgetriebe 31 aufnehmende Gehäuse 32 besteht aus einem rohrförmigen Gehäusemantel 33 sowie einem Gehäusedeckel 34, der mittels Schrauben 48 fest und somit auch flüssigkeitsdicht mit dem Gehäusemantel 33 verbunden ist. An dem Gehäusedeckel 34 ist bei der Ausgestaltung nach Figur 2 außerdem der Antriebsmotor 11 coaxial zu dem Bewegungswandler 21 und dem Planetenradgetriebe 31 mittels Schrauben 16 befestigt.

Das Planetenradgetriebe 31 weist eine erste Stufe 1 und eine zweite Stufe II auf, die jeweils aus einem Sonnenrad 36 bzw. 39, einem Hohlrad 37 bzw. 40 und Planetenrädern 38 bzw. 41 bestehen. Die Planetenräder 38 und 41 eines jeden Radsatzes I. und II. sind auf einer Welle 42 drehbar gelagert und durch Distanzstücke 43 mit Abstand zueinander angeordnet. Die beiden Radsätze I. und II. des Planetenradgetriebes 31, nämlich die Sonnenräder 36 und 39, die Hohlräder 37 und 40 sowie die Pla-25 netenräder 38 und 41 sind, jeweils gleichgroß dimensioniert.

Die Planetenräder 38 der ersten Stufe 1 des Planetenradgetriebes 31 wirken mit dem Sonnenrad 36 zusammen, das an einer das Planetenradgetriebe 31 durchgreifenden Welle 44 angearbeitet ist. Über eine formschlüssige Kupplung, beispielsweise eine Stiftkupplung 45, ist die Welle 44 mit dem Gehäuse 22 des Bewegungswandlers 21 trieblich verbunden. Das Sonnenrad 39 der zweiten Stufe II des Planetenradsatzes ist dagegen über ein mit einer an einem Ansatzstück 46 angearbeiteten Stirnverzahnung 47 an das Eingangsglied 23 des Bewegungswandlers 21 angeschlossen.

Bei der Ausgestaltung nach Figur 1 ist der Antriebsmotor 11 achsparallel zur Längsachse des Bewegungswandlers 21 und des Planetenradgetriebes 31 angeordnet und über einen Riementrieb 51 mit einem Zwischenglied 15' trieblich verbunden. Dazu sind auf der Rotorwelle 14 sowie dem Zwischenglied 15 jeweils Riemenscheiben 52 bzw. 53 drehfest angebracht, die über einen Keil- oder Zahnriemen 54 miteinander verbunden sind. Die Bauweise längs der Spanneinrichtung 1 ist auf dieser Weise gegenüber der Ausgestaltung nach Figur 2 mit koaxialer Anordnung des Antriebsmotors 11 verkürzt ausgebildet.

Durch die Ausbildung des zweistufigen Planetenradgetriebes 31 mit jeweils gleich groß dimensionierten Radsätzen 1. und II. wird bewirkt, dass das zu bearbeitende Werkstück 10 in kurzer Zeit in dem Kraftspannfutter 1 einzuspannen ist und dass die vorgegebene Spannkraft während des Arbeitsvorganges, ohne dass der Antriebsmotor 11 mit umläuft, gehalten wird und an die jeweiligen Verhältnisse angepasst werden kann. Dazu sind lediglich der Rotor 12 des Antriebsmotors 11 und die mit diesem verbundenen Bauteil der Spanneinrichtung 1 kurzzeitig anzutreiben. Zur Aufrechterhaltung der auf das Werkstück 10 über die Spannbacken 4 einwirkenden Spannkraft muss in dem Antriebsmotor 11 lediglich ein Stillstandsmoment, das in Abhängigkeit von dem jeweiligen Werkstück und/oder der Bearbeitung zu wählen ist und eingestellt werden kann, anstehen. Somit laufen bei einem Arbeitsvorgang nur wenige Bauteile der Spanneinrichtung 1 um, so dass die Betriebsgeräusche niedrig gehalten werden können und der Energieverbrauch des Antriebsmotors 11 während der Bearbeitung eines Werkstückes gering ist.

Dies wird wiederrum mittels des zweistufigen Planetenradgetriebes 31 bewerkstelligt, dessen ersten Stufe I über die Welle 44 an dem ortsfesten Gehäuse 22 des Bewegungswandlers 21 abgestützt und dessen zweite Stufe II an diesen angeschlossen ist. Bei Rotation des Gehäuses 22 des Bewegungswandlers 21 wird der Radsatz der zweiten Stufe II des Planetenradgetriebes 31 angetrieben und über die Welle 44 auch die Planetenräder 38 der ersten Stufe 1, die sich in dem Hohlrad 37 abwälzen. Das Hohlrad 37 nimmt somit kein Drehmoment auf, so dass der Antriebsmotor 11 nicht durch die Rotation des Gehäuses 22 des Bewegungswandlers 21 beeinflusst wird . Obwohl somit der Antriebsmotor 11 stillgesetzt ist, wird dennoch die auf das

Werkstück 10 einwirkende Spannkraft aufrechterhalten. Der Energieverbrauch bei Arbeitsvorgängen ist bei der Spanneinrichtung 1 demnach äußerst gering.

## Patentansprüche

1. Spanneinrichtung (1) für Werkzeugmaschinen (2), die mit einem Kraftspannfutter (3) versehen und dessen Spannbacken (4) über eine axial verschiebbare Zugstange (6) betätigbar sind, wobei die Spanneinrichtung (1) einen umschaltbaren elektrischen Antriebsmotor (11) sowie einen Bewegungswandler (21) zur Umwandlung der Verstellbewegungen der Rotorwelle (14) des Antriebsmotors (11) in axiale Verstellbewegungen der Zugstange (6) aufweist und wobei zwischen dem Antriebsmotor (11) und dem Bewegungswandler (21) ein Getriebe (31) vorgesehen ist, dessen Eingangsglied mit dem Antriebsmotor (11) und dessen Ausgangsglied mit dem Bewegungswandler (21) trieblich verbindbar sind, wobei das Getriebe (31) an den Bewegungswandler (21) unmittelbar oder über Zwischenglieder ankoppelbar ist und wobei der Bewegungswandler (21), sowie das Getriebe (31) jeweils in zwei voneinander getrennten Gehäusen (22, 32) eingebaut sind, von denen das den Bewegungswandler (21) aufnehmende Gehäuse (22) drehfest mit einer Maschinenspindel (5) verbunden ist, wobei das das Getriebe (31) aufnehmende Gehäuse (32) ortsfest an einem Spindelstock (9) abgestützt ist **dadurch gekennzeichnet, dass** das Getriebe ein zweistufiges Planetenradgetriebe (31) ist, dessen Eingangsglied als Hohlrad (37) ausgebildet ist und dessen Ausgangsglied als Sonnenrad (36) ausgebildet ist und dass das Planetenradgetriebe (31) aufnehmende Gehäuse (32) geschlossen, sowie zweiteilig und flüssigkeitsdicht ausgebildet ist und aus einem ortsfest abgestützten Gehäusemantel (33) und einem auf diesen aufsetzbaren Gehäusedeckel (34) besteht.

2. Spanneinrichtung nach Anspruch 1, **dadurch gekennzeichnet, dass** die Sonnenräder (36, 39), Hohlräder (37,40) und Planetenräder (38,41) der beiden Stufen (I, II) des Planetenradgetriebes (31) jeweils gleich groß dimensioniert sind.

3. Spanneinrichtung nach einem der vorgenannten Ansprüchen 1 oder 2, **dadurch gekennzeichnet, dass** das Sonnenrad (36) der ersten Stufe (1) des Planetenradgetriebes (31) mit dem den Bewegungswandler (21) aufnehmenden Gehäuse (22) und das Sonnenrad (36) der zweiten Stufe (11) mit einem dem Bewegungswandler (21) zugeordneten Antriebsglied (23) koppelbar sind.

4. Spanneinrichtung nach einem der Ansprüche 1 bis 3, **dadurch gekennzeichnet, dass** der Antriebsmotor (11) an dem Gehäusedeckel (34) lösbar befestigt ist und dass die Abtriebswelle (14) des Antriebsmotors (11) über ein Zwischenglied (15) mit dem Hohlrad (40) der ersten Stufe (I) des Planetenradgetriebes (31) trieblich verbunden ist.

5. Spanneinrichtung nach einem der Ansprüche 1 bis 3, **dadurch gekennzeichnet, dass** der Antriebsmotor (11) über einen Riementrieb (51) mit einem Zwischenglied (Riemenscheibe 53) trieblich verbunden ist, das unmittelbar an dem Hohlrad (37) der ersten Stufe (1) des Planetenradgetriebes (31) befestigt ist.

6. Spanneinrichtung nach einem oder mehreren der Ansprüche 1 bis 5, **dadurch gekennzeichnet, dass** das Sonnenrad (36) der ersten Stufe (1) des Planetenradgetriebes (31) drehtest auf einer das Planetenradgetriebe (31) durchgreifenden Welle (44) gehalten ist und dass die Welle (44) über eine Zahn- oder Stiftkupplung (45) formschlüssig mit dem den Bewegungswandler (21) aufnehmenden Gehäuse (22) verbunden ist.

7. Spanneinrichtung nach einem oder mehreren der Ansprüche 1 bis 6,
**dadurch gekennzeichnet, dass** die Verzahnung des Hohlrades (40) der zweiten Stufe (II) des Planetenradgetriebes (31) unmittelbar in die Innenmantelfläche des Gehäusemantels (33) des das Planetenradgetriebe (3 1) aufnehmenden Gehäuses (32) eingearbeitet ist.

8. Spanneinrichtung nach einem oder mehreren der Ansprüche 1 bis 7,
**dadurch gekennzeichnet, dass** das Sonnenrad (39) der zweiten Stufe (II) des Planetenradgetriebes (31) formschlüssig, z.B. mittels einer an einem Zwischenstück (45) vorgesehenen Stirnverzahnung (47), mit dem den Bewegungswandler (21) zugeordneten Antriebsglied (23) trieblich verbunden ist.

9. Spanneinrichtung (1) nach einem der Ansprüche 1 bis 8, **dadurch gekennzeichnet, dass** der Bewegungswandler (21) und die diesem zugeordneten Bauteile, nämlich eine Verstellmutter (27), eine auf diese einwirkende Feder (30), sowie mehrere Kugel-oder Planetenrollenspindeln (29) in dem Gehäuse (32) eingesetzt sind, das mittels Schrauben (24) fest an der Maschinenspindel (5) angebracht ist.

## Claims

1. Clamping device (1) for machine tools (2) which are provided with a powered clamping chuck (3) and the clamping jaws (4) of which can be actuated by means of an axially displaceable pull rod (6), wherein the clamping device (1) comprises a reversible electric driving motor (11) and a movement converter (21) for converting the adjusting movements of the rotor shaft (14) of the driving motor (11) into axial adjusting movements of the pull rod (6) and wherein provided between the driving motor (11) and the movement converter (21) there is a gear unit (31), the input member of which can be drivingly connected with the driving motor (11) and the output member of which can be drivingly connected with the movement converter (21), wherein the gear unit (31) can be coupled directly or via intermediate members to the movement converter (21) and wherein the movement converter (21) and the gear unit (31) are individually installed in two housings (22, 32) which are separated from one another and of which the housing (22) receiving the movement converter (21) is connected with a machine spindle (5) so that it cannot turn, wherein the housing (32) receiving the gear unit (31) is supported in a fixed location on a headstock (9), **characterised in that** the gear unit is a two-stage planetary gear unit (31), the input member of which is embodied in the form of a ring gear (37) and the output member of which is embodied in the form of a sun gear (36), and **in that** the housing (32) receiving the planetary gear unit (31) is closed, formed in two parts and fluid tight and comprises a housing shell (33) supported in a fixed location and a housing cover (34) which can be mounted on the latter.

2. Clamping device according to claim 1, **characterised in that** the sun gears (36, 39), ring gears (37, 40) and planet gears (38, 41) of the two stages (I, II) of the planetary gear unit (31) are in each case of the same dimensions.

3. Clamping device according to one of the preceding claims 1 or 2, **characterised in that** the sun gear (36) of the first stage (I) of the planetary gear unit (31) can be coupled with the housing (22) receiving the movement converter (21) and the sun gear (36) of the second stage (II) can be coupled with an input driving member (23) associated with the movement converter (21).

4. Clamping device according to one of claims 1 to 3, **characterised in that** the driving motor (11) is fastened detachably to the housing cover (34) and **in that** the output driving shaft (14) of the driving motor (11) is drivingly connected with the ring gear (40) of the first stage (I) of the planetary gear unit (31) via an intermediate member (15).

5. Clamping device according to one of claims 1 to 3, **characterised in that** the driving motor (11) is drivingly connected via a belt drive (51) with an intermediate member (belt pulley 53) which is fastened directly to the ring gear (37) of the first stage (I) of the planetary gear unit (31).

6. Clamping device according to one or more of claims 1 to 5, **characterised in that** the sun gear (36) of the first stage (I) of the planetary gear unit (31) is held so that it cannot turn on a shaft (44) engaging through the planetary gear unit (31) and **in that** the shaft (44) is connected in form-locking manner with the housing (22) receiving the movement converter (21) via a toothed gear coupling or pin coupling (45).

7. Clamping device according to one or more of claims 1 to 6, **characterised in that** the teeth of the ring gear (40) of the second stage (II) of the planetary gear unit (31) are formed directly in the inner shell face of the housing shell (33) of the housing (32) receiving the planetary gear unit (31).

8. Clamping device according to one or more of claims 1 to 7, **characterised in that** the sun gear (39) of the second stage (II) of the planetary gear unit (31) is drivingly connected with the input driving member (23) associated with the movement converter (21) in a form-locking manner, e.g. by means of a set of spur teeth (47) provided on an intermediate part (45).

9. Clamping device (1) according to one of claims 1 to 8, **characterised in that** the movement converter (21) and the components associated with the latter, namely an adjusting nut (27), a spring (30) acting on the latter, and a plurality of ball screws or planetary roll spindles (29) are fitted in the housing (32) which is attached securely to the machine spindle (5).

## Revendications

1. Dispositif de serrage (1) pour des machines-outils (2), qui est pourvu d'un mandrin (3) et dont les mâchoires de serrage (4) sont aptes à être actionnées par l'intermédiaire d'une barre de traction (6) mobile axialement, le dispositif de serrage (1) comportant un moteur d'entraînement électrique (11) réversible ainsi qu'un convertisseur de mouvement (21) pour convertir les mouvements d'ajustement de l'arbre de rotor (14) du moteur d'entraînement (11) en mouvements d'ajustement axiaux de la barre de traction (6), et une transmission (31) étant prévue entre le moteur d'entraînement (11) et le convertisseur de mouvement (21), avec son organe d'entrée apte à être relié en terme de transmission au moteur d'entraînement (11), et l'organe de sortie au convertisseur de mouvement (21), la transmission (31) étant apte à être accouplée au convertisseur de mouvement (21) directement ou grâce à des organes intermédiaires, le convertisseur de mouvement (21) et la transmission (31) étant montés respectivement dans deux boîtiers (22, 32) séparés l'un de l'autre, parmi lesquels le boîtier (22) qui reçoit le convertisseur de mouvement (21) est relié fixe en rotation à une broche de machine (5), et le boîtier (32) qui reçoit la transmission (31) étant en appui de manière stationnaire contre une poupée fixe (9),
**caractérisé en ce que** la transmission est un engrenage planétaire à deux niveaux (31) dont l'organe d'entrée est conçu comme une couronne à denture intérieure (37) et dont l'organe de sortie est conçu comme un planétaire (36), et le boîtier (32) qui reçoit l'engrenage planétaire (31) est fermé, est en deux parties et est étanche au liquide et se compose d'une gaine de boîtier (33) en appui de manière stationnaire, et d'un couvercle de boîtier (34) apte à être posé sur celle-ci.

2. Dispositif de serrage selon la revendication 1, **caractérisé en ce que** les planétaires (36, 39), les couronnes à denture intérieure (37, 40) et les satellites (38, 41) des deux niveaux (I, II) du planétaire sont de même taille.

3. Dispositif de serrage selon l'une des revendications précédentes 1 à 2, **caractérisé en ce que** le planétaire (36) du premier niveau (1) de l'engrenage planétaire (31) est apte à être accouplé au boîtier (22) qui reçoit le convertisseur de mouvement (21), et le planétaire (36) du second niveau (11) est apte à être accouplé à l'organe d'entraînement (23) associé au convertisseur de mouvement (21).

4. Dispositif de serrage selon l'une des revendications 1 à 3, **caractérisé en ce que** le moteur d'entraînement (11) est fixé de manière amovible au couvercle de boîtier (34) et **en ce que** l'arbre de sortie (14) du moteur d'entraînement (11) est relié en terme de transmission grâce à un organe intermédiaire (15) à la couronne à denture intérieure (40) du premier niveau (I) de l'engrenage planétaire (31).

5. Dispositif de serrage selon l'une des revendications 1 à 3, **caractérisé en ce que** le moteur d'entraînement (11) est relié en terme de transmission grâce à un entraînement par courroie (51) à un organe intermédiaire (poulie 53) qui est fixé directement à la couronne à denture intérieure (37) du premier niveau (1) de l'engrenage planétaire (31).

6. Dispositif de serrage selon l'une des revendications 1 à 5, **caractérisé en ce que** le planétaire (36) du premier niveau (1) de l'engrenage planétaire (31) est retenu fixe en rotation sur un arbre (44) qui traverse ledit engrenage planétaire (31), et **en ce que** l'arbre (44) est relié par complémentarité de forme, par l'intermédiaire d'un accouplement à dents ou à tiges (45), au boîtier (22) qui reçoit le convertisseur de mouvement (21).

7. Dispositif de serrage selon l'une des revendications 1 à 6, **caractérisé en ce que** la denture de la couronne à denture intérieure (40) du second niveau (II) de l'engrenage planétaire (31) est réalisée directement dans la surface latérale intérieure de l'enveloppe (33) du boîtier (32) qui reçoit l'engrenage planétaire (31).

8. Dispositif de serrage selon l'une des revendications 1 à 7, **caractérisé en ce que** le planétaire (39) du second niveau (II) de l'engrenage planétaire (31) est relié en terme de transmission par complémentarité de forme, par exemple à l'aide d'une denture frontale (47) prévue sur une pièce intermédiaire (45), à l'organe d'entraînement (23) associé au convertisseur de mouvement (21) .

9. Dispositif de serrage selon l'une des revendications 1 à 8, **caractérisé en ce que** le convertisseur de mouvement (21) et les composants associés à celui-ci, à savoir un écrou d'ajustement (27), un ressort (30) agissant sur celui-ci et plusieurs broches (29), sont placés dans le boîtier (32) qui est monté de manière fixe sur la broche de machine (5) à l'aide de vis (24).
